# EUROPEAN PATENT APPLICATION

(11) **EP 0 750 008 A2**
(43) Date of publication of application: **27.12.1996**
(21) Application number: 96303758.5
(22) Date of filing: 24.05.1996
(51) Int. Cl.: C08K 3/22, C08L 83/04

(54) **Thermally conductive silicone rubber composition**

(30) Priority: 25.05.1995 JP 151004/95
(71) Applicant: Dow Corning Toray Silicone Company Limited, Tokyo (JP)
(72) Inventor: Ishikawa, Takae, c/o Dow Corning Toray Silicone, Ichihara-shi, Chiba Pref. (JP); Mine, Katsutoshi, c/o Dow Corning Toray Silicone, Ichihara-shi, Chiba Pref. (JP); Yamakawa, Kimlo, c/o Dow Corning Toray Silicone, Ichihara-shi, Chiba Pref. (JP)
(74) Representative: Kyle, Diana

(57) **Abstract**

A thermally conductive silicone rubber composition that, exhibits excellent handling characteristics at room temperature and cures rapidly when heated comprising an alkenyl-containing organopolysiloxane; an organohydrogenpolysiloxane; alumina micropowder; and a microparticulate catalyst comprising thermoplastic resin with a softening point of 40°C to 200°C.

## Description

This invention relates to thermally conductive silicone rubber compositions. More particularly, this invention relates to thermally conductive silicone rubber compositions that, despite being highly loaded with alumina micropowder for the purpose of generating a highly thermally conductive silicone rubber, nevertheless exhibit excellent handling characteristics at room temperature and cure rapidly when heated.

Higher densities and higher levels of integration are trends in the production of electronic devices, such as hybrid integrated circuits and printed wiring boards, on which electronic components such as transistors, integrated circuits, memory elements, and so forth, are mounted. These trends have been accompanied by the use of various types of thermally conductive silicone rubber compositions for the purpose of efficient thermal radiation. Addition reaction-curing thermally conductive silicone rubber compositions have been used for this purpose. For example, Japanese Patent Application Laid Open (Kokai or Unexamined) Number Sho 63-251466 (251,466/1988) has proposed a thermally conductive silicone rubber composition comprising an organopolysiloxane containing at least 0.1 mole% alkenyl in each molecule, an organohydrogenpolysiloxane containing at least 2 silicon-bonded hydrogen atoms in each molecule, spherical alumina micropowder having an average particle size of 10 to 50 micrometers, spherical or nonspherical alumina micropowder with an average particle size of less than 10 micrometers, and platinum or a platinum compound. Japanese Patent Application Laid Open (Kokai or Unexamined) Number Hei 2-41362 [(1,362/1990) teaches a thermally conductive silicone rubber composition comprising an alkenyl-functional organopolysiloxane, an organohydrogenpolysiloxane, amorphous alumina micropowder having an average particle size of 0.1 to 5 micrometers, spherical alumina micropowder having an average particle size of 5 to 50 micrometers, and a platinum catalyst. Japanese Patent Application Laid Open (Kokai or Unexamined) Number Hei 5-105814 (105,814/1993) discloses a thermally conductive silicone rubber composition comprising an organopolysiloxane containing on average at least 0.5 alkenyl groups in each molecule, an organohydrogenpolysiloxane containing at least 2 silicon-bonded hydrogen atoms in each molecule, high-purity alumina micropowder having an average particle size of 50 micrometers or less and a major axis/minor axis ratio of 1.0 to 1.4, and platinum a catalyst.

Thermally conductive silicone rubber compositions of this type are ordinarily loaded with large amounts of alumina micropowder in order to raise the thermal conductivity of the silicone rubber afforded by composition cure. However, the admixture of large quantities of alumina micropowder is accompanied by such problems as an inhibition of the addition reaction and the failure to achieve an acceptable cure even upon heating. While it is true that increasing the addition of the platinum catalyst can improve the curability when the thermally conductive silicone rubber composition is heated, this tactic is itself accompanied by the problems of rapid thickening at room temperature and poor handling characteristics.

The inventors achieved the present invention as a result of extensive investigations directed to solving the problems described above.

In specific terms, then, the present invention takes as its object the introduction of a thermally conductive silicone rubber composition that, despite being highly loaded with alumina micropowder for the purpose of generating a highly thermally conductive silicone rubber, nevertheless exhibits excellent handling characteristics at room temperature and cures rapidly when heated.

The present invention relates to a thermally conductive silicone rubber composition comprising
(A) 100 parts by weight of an organopolysiloxane that contains at least 2 silicon-bonded alkenyl groups in each molecule,
(B) 0.1 to 50 parts by weight of an organohydrogenpolysiloxane that contains at least 2 silicon-bonded hydrogen atoms in each molecule,
(C) 300 to 1,200 parts by weight of an alumina micropowder,
   and
(D) 0.005 to 10 parts by weight of an microparticulate catalyst having an average particle size of 0.01 to 500 micrometers and comprising a thermoplastic resin with a softening point of 40°C to 200°C that contains at least 0.01 weight% as platinum metal atoms of a platinum catalyst.

The thermally conductive silicone rubber composition according to the present invention will be explained in greater detail below.

The organopolysiloxane (A), which is the base ingredient of the present composition, contains an average of at least 2 silicon-bonded alkenyl groups in each molecule. The silicon-bonded alkenyl in component (A) is exemplified by vinyl, allyl, butenyl, pentenyl, hexenyl, and heptenyl, with vinyl being particularly preferred. The alkenyl may be bonded in component (A) in terminal and/or nonterminal position on the molecular chain. The non-alkenyl silicon-bonded organic groups in component (A) are exemplified by alkyl groups such as methyl, ethyl, propyl, butyl, pentyl, hexyl, heptyl, and so forth; aryl groups such as phenyl, tolyl, xylyl, naphthyl, and so forth; aralkyl groups such as benzyl, phenethyl, and so forth; and haloalkyl groups such as chloromethyl, 3-chloropropyl, 3,3,3-trifluoropropyl, and so forth. Methyl and phenyl are particularly preferred. The molecular structure of component (A) is exemplified by straight-chain, partially branched straight-chain, cyclic, and branched structures, with straight-chain structures being preferred. The viscosity of component (A) is not critical, but is preferably 10 to 500,000 centipoise at 25°C and more preferably 50 to 100,000 centipoise at 25°C. The physical properties of the ultimately obtained silicone rubber decline at component (A) viscosities below 10 centipoise at 25°C, while the composition has poor handling characteristics when the component (A) viscosity exceeds 500,000 centipoise.

Subject organopolysiloxane (A) is exemplified by, but not limited to, the following:
trimethylsiloxy-endblocked dimethylsiloxane-methylvinylsiloxane copolymers;
trimethylsiloxy-endblocked methylvinylpolysiloxanes;
trimethylsiloxy-endblocked dimethylsiloxane-methylvinylsiloxane-methylphenylsiloxane copolymers;
dimethylvinylsiloxy-endblocked dimethylpolysiloxanes:
dimethylvinylsiloxy-endblocked methylvinylpolysiloxanes;
dimethylvinylsiloxy-endblocked dimethylsiloxane-methylvinylsiloxane copolymers;
dimethylvinylsiloxy-endblocked dimethylsiloxane-methylvinylsiloxane-methylphenylsiloxane copolymers:
organopolysiloxane copolymers composed of the R¹ ₃SiO_{1/2}, R¹ ₂R²SiO₁/2, and
R¹ ₂SiO_{2/2} siloxane units and small amounts of the SiO_{4/2} siloxane unit;
organopolysiloxane copolymers composed of the R¹ ₂R²SiO_{1/2} and R¹ ₂SiO_{2/2} siloxane units and small amounts of the SiO_{4/2} siloxane unit:
organopolysiloxane copolymers composed of the R¹R²SiO_{2/2} siloxane unit and small amounts of the R¹SiO_{3/2} or R²SiO_{3/2} siloxane unit; and
mixtures of two or more of the preceding organopolysiloxanes.

R¹ in these formulas represents monovalent hydrocarbon groups excluding alkenyl groups and is specifically exemplified by alkyl groups such as methyl, ethyl, propyl, butyl, pentyl, hexyl, heptyl, and so forth; aryl groups such as phenyl, tolyl, xylyl, naphthyl, and so forth; aralkyl groups such as benzyl, phenethyl, and so forth; and haloalkyl groups such as chloromethyl, 3-chloropropyl, 3,3,3-trifluoropropyl, and so forth. R² in the preceding formulas represents alkenyl groups and is specifically exemplified by vinyl, allyl, butenyl, pentenyl, hexenyl, and heptenyl.

The organohydrogenpolysiloxane (B), which is a crosslinker for the present composition, contains an average of at least 2 silicon-bonded hydrogen atoms in each molecule. The silicon-bonded hydrogen may be bonded in component (B) in terminal and/or nonterminal position on the molecular chain. The silicon-bonded organic groups in component (B) are exemplified by alkyl groups such as methyl, ethyl, propyl, butyl, pentyl, hexyl, heptyl, and so forth; aryl groups such as phenyl, tolyl, xylyl, naphthyl, and so forth; aralkyl groups such as benzyl, phenethyl, and so forth; and haloalkyl groups such as chloromethyl, 3-chloropropyl, 3,3,3-trifluoropropyl, and so forth. Methyl and phenyl are particularly preferred. The molecular structure of component (B) is exemplified by straight-chain, partially branched straight-chain, cyclic, and branched structures, with straight-chain structures being preferred. The viscosity of component (B) is not critical, but is preferably 1 to 500.000 centipoise at 25°C and more preferably 5 to 100,000 centipoise at 25°C. The physical properties of the ultimately obtained silicone rubber decline at component (B) viscosities, at 25°C, of below 1 centipoise, at 25°C, while the composition has poor handling characteristics when the component (B) viscosity exceeds 500.000 centipoise.

Subject organohydrogenpolysiloxane (B) is exemplified by, but not limited to, the following:
trimethylsiloxy-endblocked methylhydrogenpolysiloxanes;
trimethylsiloxy-endblocked dimethylsiloxane-methylhydrogensiloxane copolymers;
trimethylsiloxy-endblocked dimethylsiloxane-methylhydrogensiloxane-methylphenylsiloxane copolymers;
dimethylhydrogensiloxy-endblocked dimethylpolysiloxanes;
dimethylhydrogensiloxy-endblocked dimethylsiloxane-methylphenylsiloxane copolymers;
dimethylhydrogensiloxy-endblocked methylphenylpolysiloxanes;
organopolysiloxane copolymers composed of the R¹ ₃SiO_{1/2}, R¹₂HSiO_{1/}2, and SiC_{4/2} siloxane units;
organopolysiloxane copolymers composed of the R¹₂HSiO_{1/2} and SiO₄ /2 siloxane units;
organopolysiloxane copolymers composed of the R¹HSiO_{2/2} siloxane unit and R¹SiO_{3/2} or HSiO_{3/2} siloxane unit; and
mixtures of two or more of the preceding organopolysiloxanes.

R¹ in these formulas represents monovalent hydrocarbon groups excluding alkenyl groups and is specifically exemplified by alkyl groups such as methyl, ethyl, propyl, butyl, pentyl, hexyl, heptyl, and so forth; aryl groups such as phenyl, tolyl, xylyl, naphthyl, and so forth; aralkyl groups such as benzyl, phenethyl and so forth; and haloalkyl groups such as chloromethyl, 3-chloropropyl, 3,3,3-trifluoropropyl, and so forth.

Component (B) is added at 0.1 to 50 weight parts per 100 weight parts component (A). The composition will not undergo an acceptable cure when component (B) is added at less than 0.1 weight part per 100 weight parts component (A). At additions in excess of 50 weight parts, the composition will either not undergo an acceptable cure or the physical properties of the obtained silicone rubber will change with the passage of time.

The alumina micropowder (C) is the component that imparts a high thermal conductivity to the silicone rubber afforded by the cure of the instant composition. There are no specific restrictions obtain on the particle size of component (C), but its average particle size preferably does not exceed 50 micrometers. The morphology of component (C) is exemplified by approximately spherical, perfectly spherical, flake-like, needle-like, and amorphous shapes. In a preferred embodiment that affords particularly good handling characteristics on the part of the present composition, component (C) consists of a mixture of (i) 10 to 95 weight% spherical or nonspherical alumina micropowder with an average particle size of 10 to 50 micrometers and (ii) 90 to 5 weight% spherical or nonspherical alumina micropowder with an average particle size less than 10 micrometers. In a preferred embodiment that equips the instant composition with an excellent storage stability, component (C) consists of alumina micropowder whose surface has been treated with an organosilicon compound. Organosilicon compounds that may be used to treat the surface of alumina micropowders are exemplified by, but not limited to, alkoxysilanes such as methyltrimethoxysilane, vinyltrimethoxysilane vinyltriethoxysilane, 3-glycidoxypropyltrimethoxysilane 3-methacryloxypropyltrimethoxysilane 3-aminopropyltrimethoxysilane, 3-aminopropyltriethoxysilane, N-(2-aminoethyl)-3-aminopropyltrimethoxysilane, and the like; chlorosilanes such as methyltrichlorosilane, dimethyldichlorosilane, trimethylmonochlorosilane, and the like; silazanes such as hexamethyldisilazane, hexamethylcyclotrisilazane, and so forth; and siloxane oligomers such as silanol-terminated dimethylsiloxane oligomers, silanol-terminated dimethylsiloxane-methylvinylsiloxane co-oligomers, silanol-terminated methylvinylsiloxane oligomers, silanol-terminated methylphenylsiloxane oligomers, and so forth. The technique for treating the surface is exemplified by, but not limited to, dry techniques in which the alumina micropowder is directly mixed with the organosilicon compound; wet techniques in which the organosilicon compound is mixed with alumina micropowder and an organic solvent such as toluene, methanol, heptane, and the like; and in situ techniques in which the surface of the alumina micropowder is treated by blending alumina micropowder into a mixture of component (A) and the organosilicon compound or blending the organosilicon compound into a mixture of component (A) and alumina micropowder. Treatment of the surface of the alumina micropowder with an organosilicon compound is preferably accompanied by the addition of compounds such as an organometallic compound (e.g., organotitanium and so forth), water, etc., in order to increase the treatment efficiency.

Component (C) is added at 300 to 1,200 weight parts per 100 weight parts component (A). The ultimately obtained silicone rubber will not have a high thermal conductivity when component (C) is added at less than 300 weight parts per 100 weight parts component (A). When, on the other hand, more than 1,200 weight parts component (C) is added, the composition will exhibit a substantially increased viscosity and substantially reduced handling characteristics.

Component (D) is a microparticulate catalyst added for the purpose of accelerating the cure of the present composition. This component comprises a thermoplastic resin with a softening point of 40°C to 200°C that contains at least 0.01 weight% as platinum metal atoms of a platinum catalyst. This component should have an average particle size of 0.01 to 500 micrometers and preferably has an average particle size in the range from 0.1 to 50 micrometers. The preparation of microparticulate catalyst with an average particle size below 0.01 micrometer is very problematic, while at sizes above 500 micrometers the microparticulate catalyst cannot be uniformly dispersed in component (A) and the resulting composition will therefore exhibit a nonuniform curability. Component (D) may have a structure, for example, in which the platinum catalyst is dissolved or dispersed in the thermoplastic resin, or may have a microcapsule structure in which the platinum catalyst is enclosed in a shell or skin of the thermoplastic resin. The platinum catalyst under consideration is exemplified by very finely divided platinum, platinum black, platinum-on-silica micropowder, platinum-on-active carbon, chloroplatinic acid, platinum tetrachloride, alcohol solutions of chloroplatinic acid, platinum-olefin complexes, and complexes between platinum and alkenylsiloxanes such as divinyltetramethyldisiloxane and the like. Platinum complexes with divinyldisiloxanes are specifically preferred. The platinum catalyst content in component (D) should be at least 0.01 weight% as platinum metal atoms. An acceptable cure acceleration is not obtained when the microparticulate catalyst comprises a thermoplastic resin with a platinum catalyst content below 0.01 weight% as platinum metal atoms. No particular restrictions apply to the thermoplastic resin as long as it has a softening point in the range from 40°C to 200°C. The use of microparticulate catalyst made from a thermoplastic resin with a softening point below 40°C results in a composition with a strongly reduced room-temperature storage stability. The use of microparticulate catalyst made from a thermoplastic resin whose softening point exceeds 200°C causes the composition to have a very diminished curability. The subject thermoplastic resin is exemplified by, but not limited to, acrylic resins, polycarbonate resins, polystyrene resins, methylcellulose resins, polysilanes, nylon resins, polyester resins, polypropylene resins, and thermoplastic silicone resins whose main component is the C₆H₅SiO_{3/2} siloxane unit and whose other siloxane units are selected from (C₆H₅)₂SiO_{2/2}, CH₃SiO_{3/2}, (CH₃)₂SiO_{2/2}, CH₃(CH₂=CH)SiO_{2/2}, and CH₃(C₆H₅)SiO_{2/2}. The softening point of these thermoplastic resins can be determined by placing the resin on a hot plate, raising the temperature at a constant rate, and observing resin softening with a microscope.

Component (D) can be prepared, for example, by a gas-phase drying method in which the platinum catalyst and thermoplastic resin are first mixed to homogeneity and this mixture is then particulated. Another method for the preparation of component (D) consists of interfacial or in situ polymerization of the thermoplastic resin in the presence of the platinum catalyst. Coacervation in the presence of the platinum catalyst and in-liquid drying are additional examples of methods for the preparation of component (D). Gas-phase drying and in-liquid drying are preferred for their ability to produce microparticulate catalyst with a narrow particle size distribution in a relatively simple manner. In some cases the platinum catalyst will be bound at the surface of the microparticulate catalyst afforded by these methods, and this catalyst is preferably removed with a cleaner since doing so makes possible the preparation of a thermally conductive silicone rubber composition with an excellent storage stability. This cleaner is preferably unable to dissolve the thermoplastic resin but capable of dissolving the platinum catalyst, and examples of such cleaners are alcohols such as methyl alcohol, ethyl alcohol, and the like, and siloxane oligomers such as hexamethyldisiloxane and the like.

Component (D) should be added at 0.005 to 10 weight parts per 100 weight parts component (A). The addition of less than 0.005 weight part component (D) per 100 weight parts component (A) yields a composition with a substantially impaired curability. On the other hand, there is little change in the curability at additions in excess of 10 weight parts, which makes such additions uneconomical.

The present composition is prepared by mixing the above-described components (A) to (D) to homogeneity. In addition to these, components that may be added to this composition on an optional basis are exemplified by, but not limited to, fumed silica, precipitated silica, titanium dioxide, carbon black, alumina, quartz powder, glass fiber, and these inorganic fillers after surface treatment with an organosilicon compound such as an organoalkoxysilane, organochlorosilane, organosilazane, etc. The addition of a cure inhibitor is preferred for the purpose of obtaining additional improvements in the handling characteristics of the present composition at room temperature. Said cure inhibitor is exemplified by alkyne alcohols such as 3-methyl-1-butyn-3-ol, 3,5-dimethyl-1-hexyn-3-ol, 2-pnenyl-3-butyn-2-ol, and so forth; by ene-yne compounds such as 3-methyl-3-penten-1-yne, 3,5-dimethyl-3-hexen-1-yne, and so forth; as well as by 1,3,5,7-tetramethyl-1,3,5,7-tetravinylcyclotetrasiloxane, 1,3,5,7-tetramethyl-1,3,5,7-tetrahexenylcyclotetrasiloxane, and benzotriazole. The preferred range for cure inhibitor addition is 10 to 50,000 weight-ppm in the invention composition. The following may also be added to the present composition insofar as the object of the present invention is not impaired: organopolysiloxane containing a single silicon-bonded hydrogen atom or alkenyl group in each molecule, organopolysiloxane free of SiH and alkenyl, organopolysiloxane whose molecule contains silicon-bonded alkoxy and silicon-bonded hydrogen or alkenyl, an organosilicon compound each molecule of which contains the epoxy group and silicon-bonded alkoxy, an organosilicon compound each molecule of which contains the methacryloxy group and silicon-bonded alkoxy, crepe-hardening inhibitors, storage stabilizers, heat-stabilizing additives, flame retardants, and colorants.

The particular technique for preparing the thermally conductive silicone rubber composition according to the present invention is not crucial. This composition can be prepared, for example, using a mixing device such as a ROSS® or planetary mixer. ROSS® is a registered trademark of the Charles Ross and Son Co. Of Hauppauge, NY. The admixture of component (D) during the preparation of the thermally conductive silicone rubber composition according to the present invention must be effected at a temperature below the softening point of the thermoplastic resin making up component (D) and at an intensity that avoids fracturing component (D). The thermally conductive silicone rubber composition thus prepared is preferably stored under refrigeration (at or less than 10°C) or at temperatures not exceeding room temperature (20°C to 30°C), and refrigerated storage is particularly preferred. When the composition is to be held in long-term storage, it is preferably divided up into at least 2 components and these are then intermixed just before use.

The thermally conductive silicone rubber composition according to the present invention forms highly thermally conductive silicone rubbers. In consequence thereof, this composition can be used, for example, as a potting agent or adhesive for hybrid integrated circuits and printed wiring boards bearing electronic components such as transistors, integrated circuit, memory elements, and so forth; as an adhesive for semiconductor elements; and as an adhesive/sealant for engine mounts. In addition, the silicone rubber afforded by the cure of this thermally conductive silicone rubber composition can be molded into a heat-radiating sheet and used in this form.

### EXAMPLES

The thermally conductive silicone rubber composition according to the present invention will be explained in greater detail below through working examples. The viscosity values reported in the examples were measured at 25°C. The handling characteristics of the thermally conductive silicone rubber compositions were evaluated by measuring the change in composition viscosity at 25°C beginning immediately after preparation of the composition. The curability of the thermally conductive silicone rubber compositions was evaluated as follows: the composition was heated at 150°C for 30 minutes or 60 minutes to give a silicone rubber, and the durometer of the particular silicone rubber was measured using the JIS (Japanese Industrial Standard) A durometer specified in JIS K 6301. The thermal conductivity was measured on the silicone rubber obtained by heating the thermally conductive silicone rubber composition at 150°C for 60 minutes. The thermal conductivity was measured using a SHORTHERM® QTM instrument (nonsteady-state hot wire method). SHORTHERM® is a registered trademark of Showa Denko Kabushiki Kaisha of Tokyo, Japan.

### Example 1

A thermally conductive silicone rubber composition was prepared by mixing the following to homogeneity in a ROSS® mixer: 100 weight parts dimethylvinylsiloxy-endblocked dimethylpolysiloxane with a viscosity, at least 25°C, of 100 centipoise, 5 weight parts trimethylsiloxy-endblocked dimethylsiloxane-methylhydrogensiloxane copolymer with a viscosity, at 25°C, of 5 centipoise that contained on average 3 silicon-bonded hydrogen in pendant position on the molecular chain, 400 weight parts spherical alumina micropowder with an average particle size of 9 micrometers, 200 weight parts spherical alumina micropowder with an average particle size of 20 micrometers, 0.5 weight part microparticulate catalyst (average particle size = 1 micrometer) comprising a thermoplastic silicone resin (softening point = 85°C) containing 0.5 weight% as platinum metal atoms of a platinum/1,1,3,3-tetramethyl-1,3-divinyldisiloxane complex, and 0.5 weight part 1,3,5,7-tetramethyl-1,3,5,7-tetravinylcyclotetrasiloxane. The handling characteristics and curability of this thermally conductive silicone rubber composition and the thermal conductivity of the silicone rubber afforded by its cure were measured, and these results are reported in Table 1.

### Example 2

Using a ROSS® mixer, 100 weight parts dimethylvinylsiloxy-endblocked dimethylpolysiloxane with a viscosity at 25°C, of 100 centipoise, 5 weight parts hexamethyldisilazane, and 1 weight part water were mixed in a preliminary operation. Into the resulting mixture 400 weight parts spherical alumina micropowder with an average particle size of 9 micrometers and 200 weight parts spherical alumina micropowder with an average particle size of 20 micrometers were then mixed to homogeneity at room temperature. The mixture was subsequently mixed while heating to 150°C under a vacuum of 10 mmHg and the unreacted hexamethyldisilazane and water and by-products such as ammonia, etc., were eliminated. The mixture was cooled to room temperature and then mixed to homogeneity with the following to yield a thermally conductive silicone rubber composition: 5 weight parts trimethylsiloxy-endblocked dimethylsiloxane-methylhydrogensiloxane copolymer with a viscosity of, at 25°C, 5 centipoise that contained on average 3 silicon-bonded hydrogen in pendant position on the molecular chain, 0.5 weight part microparticulate catalyst (average particle size = 1 micrometer) comprising thermoplastic silicone resin (softening point = 85°C) containing 0.5 weight% as platinum metal atoms of a platinum/1,1,3,3-tetramethyl-1,3-divinyldisiloxane complex, and 0.5 weight part 1,3,5,7-tetramethyl-1,3,5,7-tetravinylcyclotetrasiloxane. The handling characteristics and curability of this thermally conductive silicone rubber composition and the thermal conductivity of the silicone rubber afforded by its cure were measured, and these results are reported in Table 1.

### Comparative Example 1

A thermally conductive silicone rubber composition was prepared as in Example 1, but in this case replacing the microparticulate catalyst used in Example 1 with platinum/1,1,3,3-tetramethyl-1,3-divinyldisiloxane complex in sufficient quantity to provide 5 weight-ppm platinum metal atoms referred to the dimethylvinylsiloxy-endblocked dimethylpolysiloxane. The handling characteristics and curability of this thermally conductive silicone rubber composition and the thermal conductivity of the silicone rubber afforded by its cure were measured, and these results are reported in Table 1.

### Comparative Example 2

A thermally conductive silicone rubber composition was prepared as in Example 1, but in this case replacing the microparticulate catalyst used in Example 1 with platinum/1,1,3,3-tetramethyl-1,3-divinyldisiloxane complex in sufficient quantity to provide 25 weight-ppm platinum metal atoms referred to the dimethylvinylsiloxy-endblocked dimethylpolysiloxane. The handling characteristics and curability of this thermally conductive silicone rubber composition and the thermal conductivity of the silicone rubber afforded by its cure were measured, and these results are reported in Table 1.

### Comparative Example 3

A thermally conductive silicone rubber composition was prepared as in Comparative Example 1, but in this case omitting the 400 weight parts spherical alumina micropowder with an average particle size of 9 micrometers that was used in Comparative Example 1. The handling characteristics and curability of this thermally conductive silicone rubber composition and the thermal conductivity of the silicone rubber afforded by its cure were measured, and these results are reported in Table 1.

### Comparative Example 4

A thermally conductive silicone rubber composition was prepared as in Example 2, but in this case replacing the microparticulate catalyst used in Example 2 with platinum/1,1,3,3-tetramethyl-1,3-divinyldisiloxane complex in sufficient quantity to provide 25 weight-ppm platinum metal atoms referred to the dimethylvinylsiloxy-endblocked dimethylpolysiloxane. The handling characteristics and curability of this thermally conductive silicone rubber composition and the thermal conductivity of the silicone rubber afforded by its cure were measured, and these results are reported in Table 1.

**Table 1**

| | This Invention | | Comparative Examples | | | |
|---|---|---|---|---|---|---|
| | | | Comp. Ex. 1 | Comp. Ex. 2 | Comp. Ex. 3 | Comp. Ex. 4 |
| | Ex. 1 | Ex. 2 | | | | |
| thermally conductive silicone rubber composition | | | | | | |
| viscosity (poise) | | | | | | |
| immediately after preparation | 170 | 160 | 160 | 160 | 5 | 150 |
| after 5 days | 175 | 165 | 180 | cured | 5.5 | cured |
| after 10 days | 185 | 170 | 230 | - | 7 | - |

| silicone rubber | | | | | | |
|---|---|---|---|---|---|---|
| durometer (JIS A) | | | | | | |
| 150°C x 30 min. | 65 | 65 | 55 | 65 | 15 | 65 |
| 150°C x 60 min. | 66 | 66 | 63 | 66 | 16 | 66 |
| thermal conductivity (cal/cm-sec-°C) | 3.5 x 10⁻³ | 3.5 x 10⁻³ | 3.5 x 10⁻³ | 3.5 x 10⁻³ | 1.3 x 10⁻³ | 3.5 x 10⁻³ |

The thermally conductive silicone rubber composition according to the present invention is characterized by excellent handling characteristics at room temperature and by a rapid cure when heated, notwithstanding its high loading with alumina micropowder for the purpose of providing a highly thermally conductive silicone rubber.

## Claims

1. A thermally conductive silicone rubber composition, comprising:
(A) 100 parts by weight of an organopolysiloxane containing an average of at least 2 silicon-bonded alkenyl groups per molecule;
(B) 0.1 to 50 parts by weight of an organohydrogenpolysiloxane containing an average of at least 2 silicon-bonded hydrogen atoms per molecule;
(C) 300 to 1,200 parts by weight of an alumina micropowder; and
(D) 0.005 to 10 parts by weight of a microparticulate catalyst having an average particle size of 0.01 to 500 micrometers and comprising a thermoplastic resin having a softening point of 40°C to 200°C and containing at least 0.01 weight%, as platinum metal atoms, of a platinum catalyst.

2. The thermally conductive silicone rubber composition according to Claim 1, wherein component (C) comprises
(i) 10 to 95 percent by weight of an alumina micropowder having an average particle size of 10 to 50 micrometers and selected from the group consisting of spherical and nonspherical alumina micropowders;
and
(ii) 90 to 5 percent by weight of an alumina micropowder having an average particle size of less than 10 micrometers, and selected from the group consisting of spherical and nonspherical alumina micropowders.

3. The thermally conductive silicone rubber composition according to Claim 1, wherein component (C) has been treated at the surface with an organosilicon compound.

4. The thermally conductive silicone rubber composition according to Claim 3, wherein said organosilicon compound is selected from the group consisting of alkoxysilanes, chlorosilanes, silazanes and siloxane oligomers.

5. The thermally conductive silicone rubber composition according to Claim 1, wherein the silicon-bonded alkenyl groups of component (A) are individually selected from the group consisting of vinyl, allyl, butenyl, pentenyl, hexenyl, and heptenyl groups.

6. The thermally conductive silicone rubber composition according to Claim 5, wherein the silicon-bonded alkenyl groups of component (A) are vinyl groups.

7. The thermally conductive silicone rubber composition according to Claim 1, wherein the viscosity, at 25°C, of component (A) is from 10 to 500,000 centipoise.

8. The thermally conductive silicone rubber composition according to Claim 7, wherein the viscosity, at 25°C, of component (A) is from 50 to 100,000 centipoise.

9. The thermally conductive silicone rubber composition according to Claim 1, wherein the organohydrogenpolysiloxane of component (B) contains silicon-bonded organic groups which are selected from the group consisting of alkyl, aryl, aralkyl and haloalkyl groups.

10. The thermally conductive silicone rubber composition according to Claim 9, wherein the silicon-bonded organic groups of the organohydrogenpolysiloxane of component (B) are individually selected from the group consisting of methyl and phenyl groups.

11. The thermally conductive silicone rubber composition according to Claim 1, wherein the viscosity, at 25°C, of component (B) is from 1 to 500,000 centipoise.

12. The thermally conductive silicone rubber composition according to Claim 11, wherein the viscosity, at 25°C of component (B) is from to 100,000 centipoise.

13. The thermally conductive silicone rubber composition according to Claim 1, wherein the average particle size of the microparticulate catalyst of component (D) is from 0.1 to 50 micrometers.
